# EUROPEAN PATENT APPLICATION

(11) **EP 0 537 966 A1**
(43) Date of publication of application: **21.04.1993**
(21) Application number: 92309276.1
(22) Date of filing: 12.10.1992
(51) Int. Cl.: C03C 14/00, C03C 10/08

(54) **Fibre reinforced glass ceramic article**

(30) Priority: 16.10.1991 GB 9121940
(71) Applicant: PILKINGTON PLC, St. Helens, Merseyside WA10 3TT (GB)
(72) Inventor: Ridealgh, John Andrew, Maghull, Merseyside L31 5JB (GB); Greengrass, Jane, Ormskirk, Lancashire L39 2DJ (GB)
(74) Representative: Jenkins, Peter David

(57) **Abstract**

A silicon carbide fibre reinforced glass ceramic in which the predominant crystal phases are cordierite and enstatite and which is formed from a glass composition which, when plotted on a ternary phase diagram of the magnesium aluminium silicate system lies within ±2% SiO₂ (by weight) from a straight line on the diagram joining the composition of cordierite to the composition of enstatite, known as the cordierite/enstatite tie line. The invention also provides a method of manufacturing a reinforced glass ceramic article and a glass ceramic article.

## Description

This invention relates to silicon carbide fibre reinforced glass ceramic articles and to a method for their manufacture. It relates particularly to ceramics made from glass in the magnesium aluminium silicate system and containing cordierite as a major phase.

Fibre reinforced glass ceramics have been proposed for various engineering applications. A typical composite is a silicon carbide reinforced magnesium aluminosilicate glass disclosed in US 4589900. The glass from which this ceramic is formed also contains barium oxide and it has been usual to include such an additional glass modifier when working with magnesium aluminosilicates for fibre reinforced applications.

Magnesium aluminium silicates have been disclosed as a substitute for alumina as a packaging material for integrated circuit boards. One criterion for such material has been that the thermal expansion coefficient should be similar to that of alumina i.e. 50-90 x 10⁻⁷°C⁻¹. Another criterion has been that the glass should be able to be sintered in powder form without crystallisation occurring. US 4221047 suggests a composition for a magnesium aluminium silicate of SiO₂ 52.5, Al₂O₃ 21.0, MgO 21.5, P₂O₅ 2.0, and B₂O₃ 1.0. Cordierite constitutes the predominant crystal phase.

US 4301324 discloses a range of glass ceramics wherein cordierite comprises the predominant phase, but which also contain clinoenstatite.

US 4234367 also discloses compositions yielding glass ceramics having cordierite as the predominant crystal phase.

The addition of P₂O₅ and B₂O₅ to compositions for sintering is discussed in Glass Technology Vol. 16(6) pp 286-292. In that paper it is claimed that compositions which have cordierite as the primary phase can have AlPO₄ added to give P₂O₅ which affects phase development. B₂O₃ is said to delay the onset of crystallisation until sintering is near to completion.

Cordierite has long been regarded as a potential glass ceramic material for the manufacture of fibre reinforced ceramics. One problem is that when cordierite is pressed above its liquidus temperature and cooled, mullite crystallises out. In forming mullite the liquid composition is moved away from that of stoichiometric cordierite and on further cooling cristobalite forms. Pressing above the liquidus temperature is usually referred to in the art as "melt pressing".

The formation of cristobalite is undesirable because it undergoes a large expansion change between 220 and 330°C, the thermal expansion coefficient being from 2.75 x 10⁻⁵ - 5.16 x 10⁻⁵ °C⁻¹, due to a crystal inversion. This may cause damage to composites by producing cracking of the matrix and damage to fibres in applications such as aero engines where pronounced thermal cycling occurs.

An alternative method to melt pressing is a pressing method called "window pressing" in the art, window pressing being so-called because it takes place at a temperature "window" between the lowest temperature at which the composite can be pressed, namely Tg (the glass transition temperature), and Tc (the temperature of onset of crystallisation). Window pressing has the advantage that residual structure survives from the glass powder and aids nucleation. This means that a nucleating agent such'as titania is not required. The presence of nucleating quantities of titania is thought to form titanium silicide which bonds the fibre to the ceramic matix and gives rise to a brittle composite. Zirconia is a possible alternative to titania, but it also has problems because it promotes formation of cristobalite. Cordierite was originally selected for window pressing and has been successfully pressed and cerammed (i.e. crystals are grown in the glassy matrix) to give tough composites of small size. Unfortunately, problems arise when larger components are window pressed. Differential thermal analysis has shown that there is only a 63°C working range (i.e. window) between the lowest temperature at which pressing can be carried out (Tg) and the onset of crystallisation temperature (Tc) of stoichiometric cordierite. The induction heating method used to raise the component temperature inevitably gives a large temperature gradient through the component which means that some of the component is starting to crystallise and become too hard to press whilst other parts have still not become soft enough to press.

The present invention aims to solve the problem of providing a glass composition which would have a larger window between the Tg and the onset of crystallisation.

According to the present invention there is provided a silicon carbide fibre reinforced glass ceramic in which the predominant crystal phases are cordierite and enstatite and which is formed from a glass composition which, when plotted on a ternary phase diagram of the magnesium aluminium silicate system, lies within ±2% SiO₂ (by weight) from a straight line on the diagram joining the composition of cordierite to the composition of enstatite, known as the cordierite/enstatite tie line.

Such compositions have the advantage that cordierite and enstatite are the crystal species formed on ceramming and these crystals are compatible, which leads to a high percentage crystallinity as the composition can be entirely satisfied by the two phases. Furthermore, moving way from cordierite towards enstatite can open up the window working range from 63 degrees centigrade at stoichiometric cordierite to 150 degrees centrigrade for a composition of SiO₂ 55%, Al₂O₃ 22% and MgO 23%, all percentages being by weight.

The glass may further comprise P₂O₅ and B₂O₃. These can further open up the window, possibly by inhibiting the onset of crystallisation. The amount of P₂O₅ is desirably in the range 1-3% and the amount of B₂O₃ is desirably in the range 0.5-2%, percentages being all by weight.

Preferably the ceramic has greater than 99% crystallinity.

By selecting the appropriate balance of cordierite and enstatite crystals in the composite the thermal expansion can be varied between the low value of 12 x 10⁻⁷ °C⁻¹ for 100% cordierite and the higher value of 78 x 10⁻⁷ °C⁻¹ for 100% enstatite. The expansion coefficient for a particular composition on the tie line depends on the proportion of the two phases present. Surprisingly we have discovered that glass ceramic composites, made with glass compositions selected according to the present invention, have unexpectedly high strengths. The glass compositions, prior to ceramming, had strengths of only 69-138 MPa and being brittle and weak were considered unlikely candidates for ceramming. To the surprise of the present inventors the properties were massively improved by ceramming and strengths in excess of 700 MPa were obtained. This is very strong for a window pressed article. The composites were also very tough.

Also according to the present invention there is provided a method of manufacturing a silicon carbide fibre reinforced glass ceramic article having a strength in excess of 700 MPa comprising the steps of: (a) providing a homogeneous glass powder optionally with a size of ≦ 42um, and having a composition which, when cerammed, produces a cordierite/enstatite structure with greater than 98% crystallinity; (b) adding the glass powder to deionised water in which a binder, such as polyethylene oxide, has been dissolved, to form a slurry; (c) passing reinforcing fibres of silicon carbide through the slurry, the fibres having had any binder removed therefrom by heating, thereby impregnating the fibres with the glass powder; (d) drying the impregnated fibres to form a prepreg; (e) cutting the prepreg and stacking the cut portions in a hot press; (f) pressing the cut portions in the hot press to form a glass composite; and (f) ceramming the glass composite at a temperature greater than 1100°C.

The percentage crystallinity in the cerammed composite article is preferably greater than 99%. The glass composition is advantageously one according to the present invention.

Some of the compositions according to the present invention lie in the cordierite primary phase field and can therefore alternatively be melt pressed. However, pressing at such elevated temperatures may damage the reinforcing fibres and does not generally produce a ceramic composite having such high strength.

The present invention further provides a reinforced glass ceramic article made from a glass having the composition in weight percent:

| | |
|---|---|
| SiO₂ | 53.4 |
| Al₂O₃ | 21.3 |
| MgO | 22.3 |
| P₂O₅ | 2.0 |
| B₂O₃ | 1.0 |

in which the fibre reinforcement is made from silicon carbide.

The invention will now be described, by way of example only, and with reference to the accompanying drawings, in which:
Figure 1 is a ternary phase diagram of part of the magnesium aluminium silicate system;
Figure 2 is a diagrammatic cross-section through a fibre impregnation rig;
Figure 3 is a diagrammatic cross-section through a hot press; and
Figure 4 is a diagrammatic side view of an as-pressed undirectional reinforced glass ceramic article.

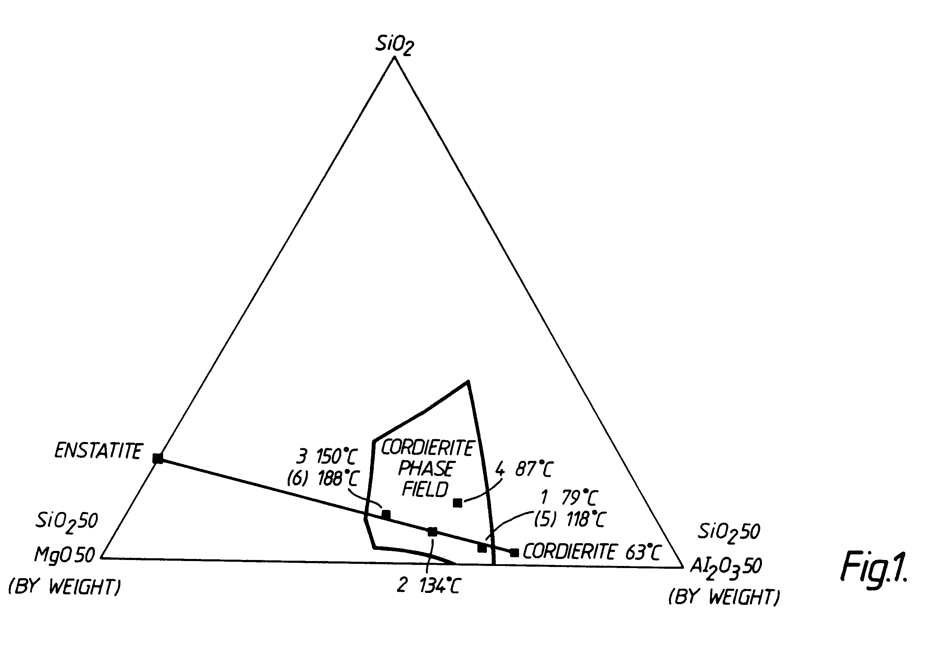

Referring to Figure 1 there is shown part of the ternary phase diagram of the magnesium aluminium silicate system. The positions on the phase diagram of cordierite and enstatite are shown. Enstatite has a composition of: MgO.SiO₂ and cordierite has a composition of 2MgO.2Al₂O₃.5SiO₂. The cordierite composition can be seen to lie outside of the cordierite primary phase field in which cordierite is stable as a phase in the magnesium and aluminium silicate system. The cordierite-enstatite tie line is shown passing through the cordierite primary phase field. At high temperatures cordierite exists ascordierite and enstatite as protoenstatite.

The invention will now be further described with reference to the following non-limiting Examples.

### EXAMPLES 1 to 6

In Examples 1 to 6, six cordierite/enstatite compositions were prepared and the amounts of the predominant crystal phases are specified below in Table 1.

**TABLE 1**

| EXAMPLE | Cordierite | PARTS BY WEIGHT | |
|---|---|---|---|
| | | Enstatite | Crystobalite |
| 1 | 92 | 8 | - |
| 2 | 76 | 24 | - |
| 3 | 63 | 37 | - |
| 4 | 78 | 18 | 4 |
| 5 | 92 | 8 | - |
| 6 | 63 | 37 | - |

The specified parts by weight must be calculated as it is not possible accurately to determine experimentally the amount of each phase present but the calculations provide a reasonable indication of the phases present.

The compositions of Examples 1 to 6 are shown plotted on the phase diagram of Figure 1 together with the temperature difference between Tg and Tc which forms the working range window for each respective compositon at the point plotted on the phase diagram. The compositions of Examples 5 and 6 in parenthesis further comprised 2% P₂O₅ by weight as aluminium metaphosphate and 1% B₂O₃ by weight and the weight percentages of the three major constituents have been normalised to 100% to enable them to be plotted. It can be seen that for the compositions of Examples 1, 2, and 3 which consist of cordierite and enstatite, moving from right to left along the tie line (i.e. from cordierite to enstatite) opens up the temperature window. Likewise adding B₂O₃ and P₂O₅ to a given enstatite/cordierite composition opens up the temperature window. This may be seen from the temperature windows of the compositon of Examples 3 and 6, which have temperature windows of 150°C and 188°C respectively, and of Examples 1 and 5, which have temperature windows of 79°C and 118°C respectively. Moving away from the tie line by more than 2% SiO₂ i.e. silica tends to close the temperature window relative to an equivalent point on the tie line. This may be seen by comparing the temperature windows of the compositions of Examples 2 and 4. Compositions lying within the cordierite primary phase field can be window pressed or melt pressed, although window pressing is preferred as it avoids possible oxidative damage to reinforcing fibres typically of silicon carbide, which are present in a resultant reinforced glass ceramic article in accordance with the invention.

Differential thermal analysis was used to determine the start of crystal growth to identify the extent of the temperature window. X ray diffraction was used to determine the crystal species present after ceramming. The composition of Example 6 was selected as the best to make into a fully reinforced glass ceramic. It had a coefficient of thermal expansion, prior to incorporation of the fibre reinforcement, of about 40 x 10⁻⁷ °C⁻¹ between 25°C and 700°C. The reinforced glass ceramic was formed in accordance with the following technique.

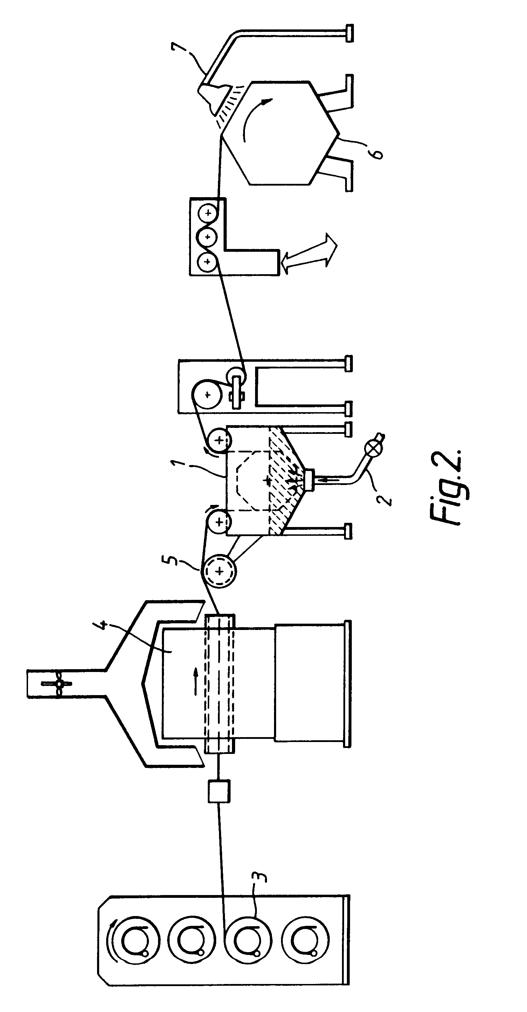

A glass-forming composition containing: SiO₂: 53.4; Al₂O₃: 21.3, MgO: 22.3: P₂O₅: 2.0: B₂O₃: 1.0, all being parts by weight, was melted in a platinum container to form a glass melt and held at 1600°C for 1 hour. It was then cast, crushed and sieved to less than 14 mesh before being remelted at 1600°C for 18 hours and poured into deionized water to form small glass particles. This double melting ensured a good mixing. The final glass powder was ground very fine and passed through a 42 micron sieve. The sieved powder was added to a liquid to form a slurry, the liquid preferably being deionised water containing a solution of polyethylene oxide. As shown in Figure 2 the resulting slurry was placed in a bath 1 and continuously agitated with compressed air which is inserted as shown by arrow A via a porous plenum 2 situated at the base of the bath 1. Strands of "Nicalon" (Registered Trade Mark) silicon carbide fibres obtained from Nippon Carbon Co. were unwound from spools 3 and passed through a tube furnace 4 at a temperature of around 800°C to burn off binder present on the fibres. The fibres were then passed over spread rollers 5 to separate the fibres. The fibres were then passed through the agitated slurry in the bath 1 where the fibres were impregnated with the fine glass powder. The combined powdered glass slurry and fibres were then removed from the bath 1 and wrapped around a mandrel 6 and dried with an infra red lamp 7 to form a prepreg in sheet form.

Sheets of prepreg were then cut to size and stacked in layers in a hot press. The number of layers was varied depending on the final thickness required. The prepreg sheets were, as described below, heated to a temperature approaching 1000°C.

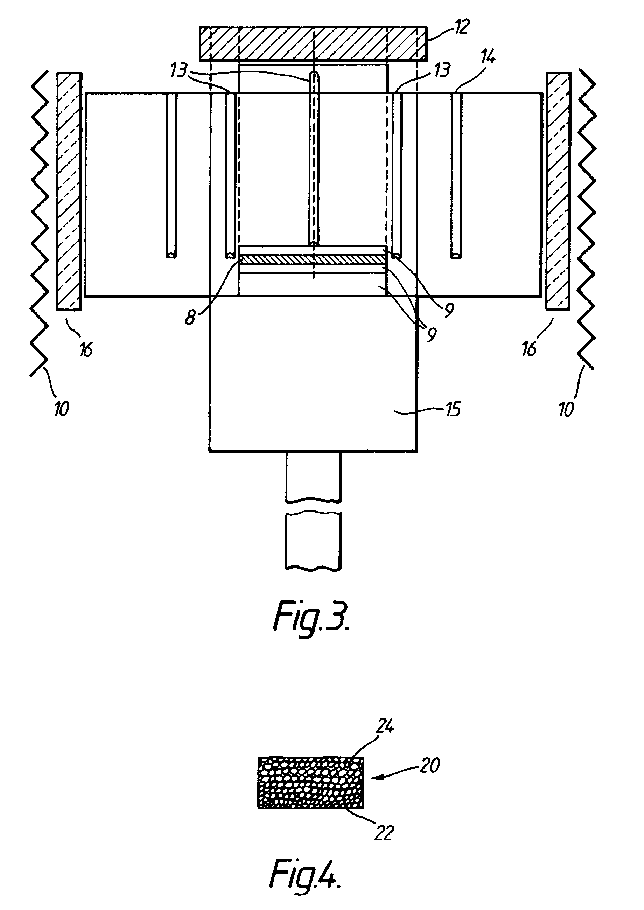

The hot press is shown in Figure 3. The prepreg sheets 8 are shown in moulds 9. The moulds are surrounded by an induction heating system containing coils 10 and a susceptor 11 and are pressurised by means of a water cooled ram 12. Power supply is controlled in response to temperatures measured by thermocouple 14 which extends around both sides of the hot press, with the thermocouple 14 on each side being spaced from the mould axis by around 10 cm. There is also a facility for monitoring temperatures by means of thermocouples 13. An ejector 15 is operable to remove the moulds and sample from the hot press. The susceptor 11, the mould pieces 9 and the ejector 15 are made of graphite. Insulation 16 is provided between each coil 10 and the susceptor 11.

The temperature window for Example No. 6 was determined to be 804°C to 992°C. The sample was heated at 80°C per minute to a temperature maximum of 976°C. This was found to result in a centre sample temperature of about 950°C which meant that all of the sample was within the temperature window. The temperature was held for 60 minutes to allow for temperature equalisation and the sample pressed at 12 MPa for 60 minutes, pressing being commenced once the temperature had been held for 20 minutes, and then removed from the press and cooled. The glass composites were brittle and comparatively weak with strengths of 69-138 MPa. However, the properties was massively improved by ceramming the composites outside the press with a schedule involving a 1 hour hold at 850°C and a 1 hour hold at 1150°C and a heating rate of 1°C per minute. The maximum strength obtained in the cerammed composite was 880 MPa. The structure of the undirectional glass ceramic fibre-reinforced article 20 is shown schematically in Figure 4 in which an array of fibres 22 is bonded together by a glass ceramic matrix 24. The composite article is well composed, has high density and has good fibre distribution.

Further pressings were made in the melt temperature window (1344°C-1409°C). These yielded low strength to relative strong glass ceramic composites with strengths of 181 to 511 MPa.

## Claims

1. A silicon carbide fibre reinforced glass ceramic in which the predominant crystal phases are cordierite and enstatite and which is formed from a glass composition which, when plotted on a ternary phase diagram of the magnesium aluminium silicate system lies within ±2% SiO₂ (by weight) from a straight line on the diagram joining the composition of cordierite to the composition of enstatite, known as the cordierite/enstatite tie line.

2. A fibre reinforced glass ceramic as claimed in claim 1 in which the glass composition used in forming the glass ceramic further comprises P₂O₅ and B₂O₃.

3. A fibre glass reinforced glass ceramic as claimed in claim 2, in which the amount of P₂O₅ is in the range of 1 to 3% by weight and the amount of B₂O₃ is in the range 0.5 to 2% by weight, each based on the total weight of the composition.

4. A fibre reinforced glass ceramic as claimed in any of claims 1 to 3 in which the ceramic has a crystallinity of greater than 99%.

5. A method of manufacturing a silicon carbide fibre reinforced glass ceramic article having a strength in excess of 700 MPa comprising the steps of:
(a) providing a homogeneous glass powder, optionally with a size of ≦ 42um, and having a composition which, when cerammed, produces a cordierite/enstatite structure with greater than 98% crystallinity;
(b) adding the glass powder to a deionised water in which a binder, such as polyethylene oxide, has been dissolved, to form a slurry;
(c) passing reinforcing fibres of silicon carbide through the slurry, the fibres having had any binder removed therefrom by heating, thereby impregnating the fibres with the glass powder;
(d) drying the impregnated fibres to form a prepreg;
(e) cutting the prepreg and stacking the cut portions in a hot press;
(f) pressing the cut portions in the hot press to form a glass composite; and
(g) ceramming the glass composite at a temperature greater than 1100°C.

6. A reinforced glass ceramic article made from a glass having the composition in weight percent:
| | |
|---|---|
| SiO₂ | 53.4 |
| Al₂O₃ | 21.3 |
| MgO | 22.3 |
| P₂O₅ | 2.0 |
| B₂O₃ | 1.0 |
in which the fibre reinforcement is made from silicon carbide.
